# EUROPEAN PATENT SPECIFICATION

(11) **EP 1 344 728 B1**
(45) Date of publication and mention of the grant of the patent: **14.12.2005**
(21) Application number: 03075720.7
(22) Date of filing: 10.03.2003
(51) Int. Cl.: B65G 15/42, A01K 31/16, A01K 43/00

(54) **Conveyor for conveying eggs and conveying unit therefor**
Förderer zum Fördern von Eiern, und Fördereinheit dafür
Transporteur pour le transport d'oeufs, et unité de transport pour celui-ci

(30) Priority: 13.03.2002 NL 1020165
(43) Date of publication of application: 17.09.2003
(73) Proprietor: A.H. Jansen Holding B.V., 3772 MC Barneveld (NL)
(72) Inventor: Schwagermann, Leendert Quirinius, 8556 AP Sloten (NL); Van Damme, Pieter, 3925 HJ Scherpenzeel (NL)
(74) Representative: Van den Heuvel, Henricus Theodorus

(56) References cited:
- ES-A- 2 012 162
- GB-A- 1 475 954
- US-A- 4 515 265
- US-A- 4 585 126

## Description

The invention relates to a conveyor track for transporting products, in particular eggs, comprising at least one transport unit, which transport unit is provided with at least one receiving space for containing at least one egg, a first boundary positioned on one side of the receiving space and a second boundary which is positioned on an opposite side of the receiving space and which follows the first boundary in a transporting direction. The invention further relates to a transport unit for use in such a conveyor track, which transport unit is provided with: at least one receiving space for containing at least one egg, a first boundary positioned on one side of the receiving space, and a second boundary which is positioned on an opposite side of the receiving space and which follows the first boundary in a transporting direction.

Diverse devices for transporting eggs are known in the prior art. The egg transport is particularly of great importance on poultry farms where eggs are produced by poultry on a relatively large scale. Using such a transporting device the eggs, generally produced in laying nests, can then be transported usually to one or more processing stations, such as a washing and/or sorting unit. The Spanish patent ES 2012162 describes an endless conveyor for transporting eggs, comprising a plurality of substantially parallel rods positioned at a mutual distance, which rods are mutually connected close to the outer ends forming part of the rods by means of two steel cables. The conveyor is driven by a drive, which drive comprises at least one wheel provided with recesses which are adapted to receive a part of the rods both during transport and in stationary state. The mutual distance between two successive rods is such that the eggs of a determined size can be supported in substantially stable manner during transport of the eggs in a substantially horizontal plane. As well as the above stated practical advantage, the conveyor described in the patent also has a number of drawbacks. A major drawback is that only eggs of a substantially similar size can be transported in stable manner using such a conveyor during an at least substantially horizontal progression of the conveyor, wherein the mutual distance between the rods is generally related to the (average) size of an egg for transporting. Eggs of differing size can therefore not usually be transported in stable manner in a substantially horizontal plane by the conveyor track, or hardly so. An alternative conveyor track according to the preamble is disclosed in the British patent specification number GB 1475 954, wherein eggs can be positioned between adjacent V-shaped carriers. A second drawback of the conventional conveyor is that it can only transport eggs in substantially linear manner. Transport of the eggs in a non-linear progression provided with at least one bend is not possible with the conveyor. A third drawback is that (a determined size of) the eggs can only be transported in stable manner in a plane running substantially horizontally. On an inclining part of the conveyor track supporting the eggs, the eggs can generally not be transported in controlled manner without significant production loss, or hardly so. Particularly at a transition from a substantially horizontal progress to a descending progress of the conveyor it has generally been found difficult to transport the eggs in controlled manner without significant production loss. A reason for the uncontrolled transport of an egg, particularly in the case of an abrupt descent of the conveyor, is a relatively unfavourable position of the centre of gravity of the egg relative to the position of a first rod - as seen in the transporting direction - engaging on the egg. A common consequence is that the egg is displaced out of the space enclosed by the adjacent V-shaped carriers engaging on the egg, which can result in production loss.

The invention has for its object, while retaining the prior art advantage, to provide a conveyor track for transporting eggs, wherein the eggs - regardless of the inclination and curve of the conveyor track and the size of the eggs - can be transported in relatively controlled manner without significant production loss.

The invention provides for this purpose a conveyor track according to the type stated in the preamble, characterized in that the receiving space is provided with at least one support element for supporting the egg such that the egg engages on at least a part of the first boundary during an at least substantially horizontal progress of the transport unit. The presence of the support element has the advantage that the mutual distance between the first boundary and the second boundary is independent of the size of the egg, this in contrast to the prior art. Support of the egg is realized particularly by the support element. A first advantage of the support element according to the invention is that not only can eggs of a single size be transported in controlled manner, but that a plurality of sizes of eggs can be transported stably on (the same) conveyor track. A second advantage of the support element is that the centre of gravity of an egg positioned on the transport unit can obtain a relatively low and thus favourable position relative to the first boundary and the second boundary, since the boundaries, in contrast to the prior art, (no longer) have the continuous support of the egg as their main purpose. No product transfer will thus be required at a transition of the transport unit from a substantially horizontal progress to a substantially descending progress, whereby accidented transport of eggs can take place by means of a single conveyor track and will therefore not usually involve product loss, this in contrast to conveyors known in the prior art. Undesired tumbling of the egg over one of the boundaries can therefore be prevented or at least countered. With the conveyor track according to the invention controlled egg transport can take place in the case of relatively steep inclines, such as for instance inclines of 45° and steeper. It is also possible to envisage transporting other types of possibly fragile products, such as for instance other foodstuffs (bread (dough) and so on) and products manufactured from glass (christmas tree decorations and so on), by applying a conveyor track according to the invention. It will be apparent that the invention is therefore not limited to egg transport. As the eggs can be transported to any desired location by means of a single conveyor track according to the invention, wherein no 'egg transfer' and other conveyor tracks are necessary, controlled egg transport can take place in relatively simple and inexpensive manner, and with a great freedom of design in respect of the dimensioning and geometry of the conveyor track. The conveyor track is therefore particularly suitable for embodiment as endless conveyor track.

A free space is preferably situated between the (average) egg and the second boundary during a substantially horizontal progress of the transport unit. The presence of free space results in a great freedom in respect of the dimensioning of the eggs for transporting. As stated above, the same transport unit is thus adapted for transport of eggs of diverse sizes and does not remain limited to transport of eggs of specific dimensions.

In a preferred embodiment the support element is provided with a support surface, which support surface extends downward in the transporting direction. Owing to the geometry of the support element, an egg present in the receiving space is urged in the direction of the first boundary during a substantially horizontal progress of the transport unit, whereby, as already mentioned above, tumbling and/or rolling of the egg during a transition, which may or may not be smooth, from a horizontal progress to a descending progress of the transport unit can be prevented or at least be countered. The egg cannot therefore develop any speed (kinetic energy) during tumbling in the direction of the first boundary, whereby the product will generally not tumble over the first boundary but will usually remain lying in stable manner on the support element. The support surface can be embodied as real (physical) support surface but in a preferred embodiment can also be constructed from an imaginary (defined) support plane. The support element is thus preferably provided with a plurality of projecting support members situated at a mutual distance, wherein the free outer ends forming part of the support members define a plane which extends downward in the transporting direction.

The first boundary and the receiving space are preferably connected pivotally to each other. The second boundary and the receiving space are preferably also connected pivotally to each other. The pivotability between elements forming part of the transport unit has the advantage that the transport unit can adjust in substantially smooth manner to a change in the incline of the transport unit, or in a bend when a non-linear conveyor track is used, which enhances a stable and controlled transport of the egg positioned on the transport unit. An additional advantage here is that no product transfer is necessary from the conveyor track to another conveyor track or processing station.

In a preferred embodiment the egg is freely displaceable in a direction at least substantially perpendicular to the transporting direction. It can therefore be possible to receive a plurality of eggs simultaneously in a single receiving space, whereby the transport capacity can increase considerably. Another advantage of the free displaceability of the egg in transverse direction is that the egg for transporting can be transferred from a supply station for eggs directly to the receiving space, whereafter the egg can roll and/or slide a (short) distance further in the receiving space. Free space will therefore be created for receiving and positioning one or more eggs supplied from the supply station in the same receiving space.

In another preferred embodiment the support element is formed such that the egg positioned on the conveyor track can position itself in a plurality of preferred positions provided by the transport unit. A first preferred position is the already described situation where the egg engages on the first boundary and wherein a free space is available between the egg and the second boundary. In a transition from a substantially horizontal progress to an ascent of the transport unit, the egg can displace into a second preferred position, wherein the egg (no longer) engages on the first boundary, but preferably engages on the second boundary. In the case of a gentle rise of the transport unit it is however conceivable that the egg will position itself in at least one intermediate, third preferred position in which the egg engages neither on the first boundary nor on the second boundary. It should be noted that at a transition of the transport unit from a descent or substantially horizontal progress to a (considerable) ascent, the egg can engage on both the first and the second boundary due to parts of the first boundary and the second boundary being pivoted toward each other. Such a particular situation can occur particularly in the case of relatively large eggs such as double-yolked eggs.

The first boundary is preferably provided with a first supporting surface adapted to support the egg, wherein the first supporting surface and the vertical enclose an angle which lies between 25° and 35°, in particular 30°. A first supporting surface with an angle of 30° has been found particularly suitable for resting an egg against in stable manner during descent and substantially horizontal progress of the transport unit, whereby controlled egg transport can generally be guaranteed. The support element, and therefore the egg, is also more readily accessible with such an angle of the supporting surface, whereby removal of the egg from the conveyor track can take place in simple manner. In another preferred embodiment the second boundary is provided with a second supporting surface adapted to support the egg, wherein the second supporting surface and the vertical enclose an angle which lies between 15° and 25°, in particular 20°. In order on the one hand to prevent or at least counter resting of the egg in stable manner against the second boundary during a substantially horizontal progress of the transport unit, research result have shown that a second supporting surface with an angle of 20° is generally sufficient to achieve this effect. On the other hand, by providing a second supporting surface with an angle of 20°, a supporting surface against which the egg can rest in stable manner is created for the egg during ascent of the transport unit, whereby controlled transport of the egg on a (relatively steep) incline is generally possible. During transport of other types of product the angles of inclination can differ significantly from the above stated values.

In yet another preferred embodiment the conveyor track is provided with positioning means located a distance from the transport unit for positioning the egg during an at least substantially horizontal progress of the transport unit such that the egg engages on at least a part of the first boundary. The positioning means function as additional assist means for the purpose of positioning the egg such that the egg engages on the first boundary during a substantially horizontal progress, whereby production loss as a result of tumbling of the egg at a transition from a substantially horizontal progress to a descending progress of the transport unit can be prevented, or can at least be countered. The positioning means can for instance be formed by vibrating means positioned on a side of the conveyor track remote from the receiving space for the egg, whereby the egg will generally move into the desired preferred position. The positioning means can for instance also be formed by brushing means positioned on a side of the conveyor track directed toward the receiving space, which brushing means engage on eggs positioned on the conveyor track in order to displace the eggs, if necessary, into a desired preferred position.

The conveyor track is preferably provided with a plurality of successive transport units. A larger number of transport units generally corresponds with a higher transport capacity, whereby a relatively large number of eggs can be transported during a particular period of time. In a particular embodiment the second boundary of a transport unit and the first boundary of a transport unit which follows in the transporting direction are integrated with each other. Optimum use can thus be made of the space available on the conveyor track, whereby the number of transport units can be maximized. Another advantage of the mutually integrated transport units is that no eggs or residual waste can accumulate between the transport units.

In a preferred embodiment the receiving space and at least one boundary of the first boundary and the second boundary are coupled releasably to each other. It is therefore possible to disconnect a contaminated and/or damaged boundary from the transport unit for subsequent cleaning respectively replacement.

The receiving space is preferably bounded on at least one side by a third boundary connected to the first boundary and the second boundary. The third boundary preferably bounds the receiving space on two sides, whereby the receiving space is wholly enclosed by boundaries. An egg positioned in the receiving space is thus enclosed on four sides with boundaries and therefore cannot generally be removed from the receiving space, for instance due to vibration, during normal operation. The third boundary is preferably formed by a cord, which cord in a particular embodiment is elastic. An elastic cord is particularly suitable for application in non-linear conveyor tracks, since the cord must be lengthened or shortened in the length direction in a curve or a bend so as to form an optimal third boundary for the receiving space of the egg.

Another advantage of the third boundary is that the product generally cannot rub or scrape against a stationary (side wall) construction enclosing the conveyor track, whereby production loss as a result hereof can be prevented, or at least countered. Yet another advantage of the third boundary is that the presence of the stationary (side wall) construction is not necessary, and is usually even superfluous, which can have a relatively favourable effect on the price of the conveyor track.

The invention also relates to a transport unit for use in such a conveyor track according to the preamble, characterized in that the receiving space is provided with at least one support element for supporting the egg such that the egg engages on at least a part of the first boundary during an at least substantially horizontal progress of the transport unit. Further advantages have already been described above.

The invention can be elucidated on the basis of the non-limitative embodiments shown in the following figures. Herein:
figure 1 shows a side view of a first preferred embodiment of a conveyor track for eggs according to the invention varying in height,
figure 2 shows a top view of a second preferred embodiment of a non-linear conveyor track according to the invention varying in height,
figure 3a shows a side view of a first embodiment of a transport unit for egg transport according to the invention,
figure 3b shows a side view of a second embodiment of a transport unit according to the invention,
figure 3c shows a side view of a third embodiment of a transport unit according to the invention, and
figure 3d shows a cross-section projected in the transporting direction of a transport unit according to the invention.

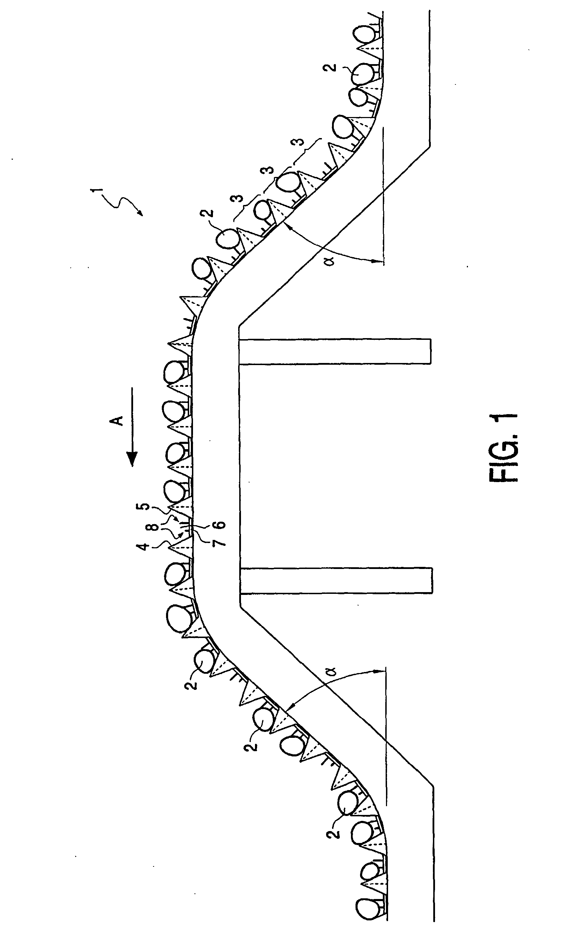

Figure 1 shows a side view of a first preferred embodiment of a conveyor track 1 for eggs 2 according to the invention varying in height. Conveyor track 1 is provided with a plurality of successive transport units 3. The transport units are each provided with a first boundary 4, a second boundary 5 and a receiving space 6 for eggs 2 positioned between first boundary 4 and second boundary 5. As shown in figure 1, a part of receiving spaces 6 comprises one (or more) egg(s) 2. Transport units 3 are displaced in a transporting direction indicated by arrow A. The receiving spaces each comprise a support element 7, which support element 7 is provided with two projecting support members 8. Free outer ends forming part of support members 8 together define an imaginary plane extending downward in the transporting direction. The orientation direction of the defined surface is thus such that an egg 2 situated in the transport unit engages on at least the first boundary 4 during a substantially horizontal progress of transport unit 3. Such a positioning of egg 2 in the horizontal progress is particularly important during a transition from a horizontal progress of transport unit 3 to a descending progress of the transport unit. The 'tumbling effect' frequently occurring in the prior art is hereby generally prevented. Owing to the positioning of eggs 2 in a preferred position, wherein the eggs engage on the first boundary 4 during a horizontal progress of transport unit 3, the eggs 2 can be transported in stable and controlled manner at relatively steep angles of inclination (up to about 45°), designated by angle α, without significant production loss. Owing to the relatively steep transport inclines, the space enclosing conveyor track 1 can generally be utilized in more efficient manner. During an ascending progress of transport units 3 the eggs generally engage on the second boundary 5. As the distance apart between mutually adjacent transport units is minimized, the second boundary 5 of a transport unit 3 is integrated with the first boundary 4 of a following transport unit 3.

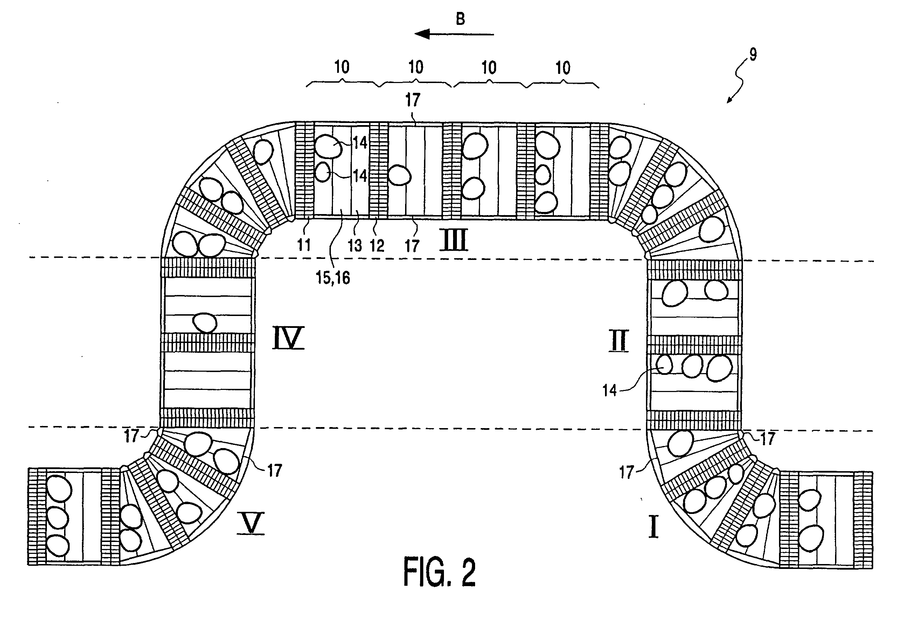

Figure 2 shows a top view of a second preferred embodiment of a non-linear conveyor track 9 according to the invention varying in height. Conveyor track 9 is adapted for egg transport in a transporting direction indicated with arrow B. As according to figure 1, the conveyor track is provided with a plurality of mutually connecting transport units 10, which transport units 10 are each provided with a first boundary 11, a second boundary 12 and a receiving space 13 for eggs 14 lying between first boundary 11 and second boundary 12. Receiving space 13 is provided with a support element 15 provided with a chamfered free surface 16 for supporting the eggs 14. The chamfering of surface 16 is such that the surface extends in a downward direction toward the first boundary 11. Receiving space 13 is also bounded on two sides by elastic (and flexible) cords 17 so as to prevent the eggs leaving transport unit 10 (undesirably) in a direction substantially perpendicular to transporting direction B. In the shown embodiment the cords are connected to both the first boundary 11 and second boundary 12. The conveyor track shown in figure 2 is divided into five segments I-V, which segments are elucidated separately hereinbelow. Segment I shows a bend in a substantially horizontal progress of conveyor track 9. The eggs 14 situated in this segment engage substantially on the first boundaries 11 of transport units 10. Segment II shows an ascending progress of conveyor track 9 in which eggs 14 engage substantially on the second boundary 12. In the substantially horizontal progress in segment III, eggs 14 are displaced substantially from the second boundary 12 to first boundary 11 as a result of the presence of the chamfered surface 16 of support element 15. Segment IV shows a descending progress of conveyor track 9, wherein the eggs 14 already engaging (in segment III) on the first boundary 11 continue to rest in stable manner against first boundary 11. Figure 2 also indicates clearly that in segment IV there is a free space present between eggs 14 and second boundary 12, whereby eggs 14 of diverse sizes can be transported using the shown conveyor track 9. Similarly to segment 1, segment V shows a substantially horizontal non-linear progress of conveyor track 9. The receiving space 13 present between the two boundaries 11,12 and support element 15 during transport of eggs 14 is dimensioned such that there still remains sufficient support surface for an egg of a bantam hen, and also such that receiving space 13 remains sufficiently large to allow (stable) accommodation of a double-yolked egg.

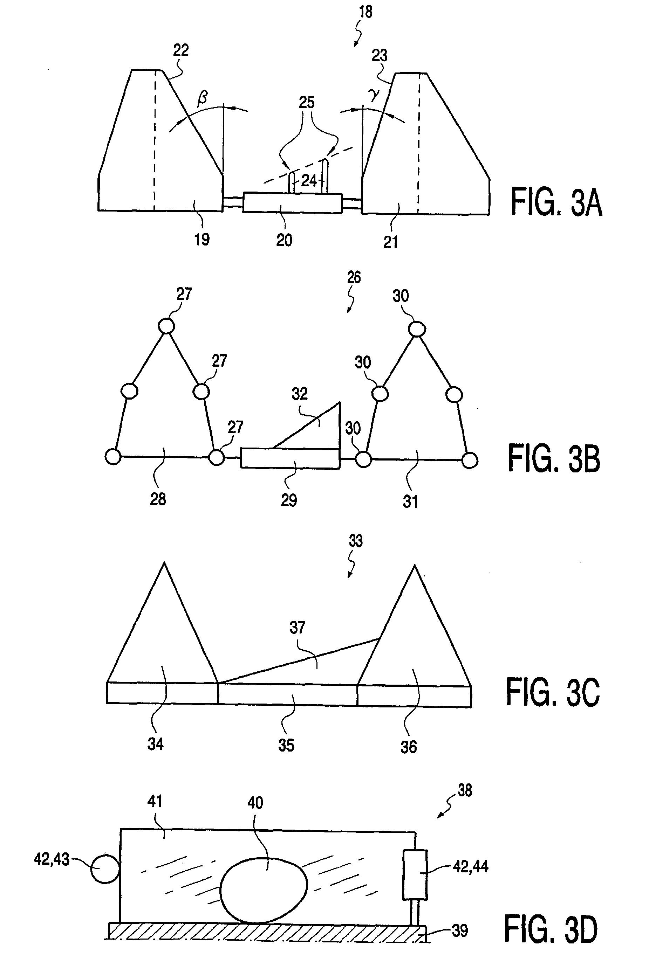

Figure 3a shows a side view of a first embodiment of a transport unit 18 for egg transport according to the invention. Transport unit 18 is provided with a first boundary 19, a receiving space 20 for eggs connected to the first boundary 19, and a second boundary 21 connected to receiving space 20. The first boundary 19 is provided with a first support surface 22, wherein the first support surface 22 and the vertical - in the horizontal plane of transport unit 18 - enclose an angle β of about 30°. The second boundary 21 is provided in contrast with a second support surface 23, wherein the second support surface 23 and the vertical - in the horizontal plane of transport unit 18 - enclose an angle γ of about 20°. The receiving space 20 is provided with two projecting support members 24, wherein free outer ends 25 forming part of support members 24 define an imaginary plane extending downward in the direction of the first boundary 19. The imaginary plane is indicated in figure 3a with a broken line. The first boundary 19, receiving space 20 and second boundary 21 are preferably connected releasably to each other.

Figure 3b shows a side view of a second embodiment of a transport unit 26 according to the invention. Transport unit 26 is provided with a first boundary 28 built up of rods 27, a receiving space 29 for eggs connected to the first boundary 28, and a second boundary 31 built up of rods 30 connected to receiving space 29. The receiving space is provided with a projecting support element 32, which support element 32 has a chamfered surface extending downward in the direction of the first boundary 28.

Finally, figure 3c shows a side view of a third embodiment of a transport unit 33 according to the invention. The transport unit forms a rigid whole and is provided with a first boundary 34, a receiving space 35 for eggs connected to the first boundary 34, and a second boundary 36 connected to receiving space 35. Receiving space 35 is further provided with a support element 37extending substantially from the first boundary 34 as far as the second boundary 36. The support element has a chamfered surface extending downward in the direction of the first boundary 34.

Figure 3d shows a cross-section, projected in a transporting direction, of a transport unit 38 according to the invention. The transport unit is provided with a support element 39 adapted to carry one or more eggs 40. The egg is enclosed by a first boundary 41 and an opposite second boundary (not shown). The egg is also bounded by a third (transverse) boundary 42. The third boundary can be formed by a preferably flexible cord 43 or a projecting bounding member 44 connected fixedly to support element 39.

The advantages of the constructions shown in figures 3a-3d have already been described above.

## Claims

1. Conveyor track (1, 9) for transporting products, in particular eggs (2, 14), comprising at least one transport unit (3, 10, 18, 26, 33, 38), which transport unit (3, 10, 18, 26, 33, 38) is provided with:
- at least one receiving space (6, 13, 20, 29, 35) for containing at least one product (2, 14),
- a first boundary (4, 11, 19, 28, 34, 41) positioned on one side of the receiving space (6, 13, 20, 29, 35), and
- a second boundary (5, 12, 21, 31, 36) which is positioned on an opposite side of the receiving space (6, 13, 20, 29, 35) and which follows the first boundary (4, 11, 19, 28, 34, 41) in a transporting direction,
**characterized in that**
the receiving space (6, 13, 20, 29, 35) is provided with at least one support element (7, 15, 24, 32, 37, 39) for supporting the product (2, 14) such that the product (2, 14) engages on at least a part of the first boundary (4, 11, 19, 28, 34, 41) during an at least substantially horizontal progress of the transport unit (3, 10, 18, 26, 33, 38).

2. Conveyor track (1, 9) as claimed in claim 1, **characterized in that** a free space (16) is situated between the product (2, 14) and the second boundary (5, 12, 21, 31, 36) during a substantially horizontal progress of the transport unit (3, 10, 18, 26, 33, 38).

3. Conveyor track (1, 9) as claimed in claim 1 or 2, **characterized in that** the support element (7, 15, 24, 32, 37, 39) is provided with a support surface (16), which support surface (16) extends downward in the transporting direction.

4. Conveyor track (1, 9) as claimed in any of the foregoing claims, **characterized in that** the support element (7, 15, 24, 32, 37, 39) is provided with a plurality of projecting support members (8) situated at a mutual distance, wherein the free outer ends forming part of the support members (8) define a plane which extends downward in the transporting direction.

5. Conveyor track (1, 9) as claimed in any of the foregoing claims, **characterized in that** the first boundary (4, 11, 19, 28, 34, 41) and the receiving space (6, 13, 20, 29, 35) are connected pivotally to each other.

6. Conveyor track (1, 9) as claimed in any of the foregoing claims, **characterized in that** the second boundary (5, 12, 21, 31, 36) and the receiving space (6, 13, 20, 29, 35) are connected pivotally to each other.

7. Conveyor track (1, 9) as claimed in any of the foregoing claims, **characterized in that** the product (2, 14) is freely displaceable in a direction at least substantially perpendicular to the transporting direction.

8. Conveyor track (1, 9) as claimed in any of the foregoing claims, **characterized in that** the support element (7, 15, 24, 32, 37, 39) is formed such that the product (2, 14) positioned on the conveyor track (1, 9) can position itself in a plurality of preferred positions provided by the transport unit (3, 10, 18, 26, 33, 38).

9. Conveyor track (1, 9) as claimed in any of the foregoing claims, **characterized in that** the first boundary (4, 11, 19, 28, 34, 41) is provided with a first supporting surface (22) adapted to support the product (2, 14), wherein the first supporting surface (22) and the vertical enclose an angle which lies between 25° and 35°, in particular 30°.

10. Conveyor track (1, 9) as claimed in any of the foregoing claims, **characterized in that** the second boundary (5, 12, 21, 31, 36) is provided with a second supporting surface (23) adapted to support the product (2, 14), wherein the second supporting surface (23) and the vertical enclose an angle which lies between 15° and 25°, in particular 20°.

11. Conveyor track (1, 9) as claimed in any of the foregoing claims, **characterized in that** the conveyor track (1, 9) is provided with positioning means located a distance from the transport unit (3, 10, 18, 26, 33, 38) for positioning the product (2, 14) during an at least substantially horizontal progress of the transport unit (3, 10, 18, 26, 33, 38) such that the product (2, 14) engages on at least a part of the first boundary (4, 11, 19, 28, 34, 41).

12. Conveyor track (1,9) as claimed in any of the foregoing claims, **characterized in that** the conveyor track (1, 9) is provided with a plurality of successive transport units (3, 10, 18, 26, 33, 38).

13. Conveyor track (1, 9) as claimed in claim 12, **characterized in that** the second boundary (5, 12, 21, 31, 36) of a transport unit (3, 10, 18, 26, 33, 38) and the first boundary (4, 11, 19, 28, 34, 41) of a transport unit (3, 10, 18, 26, 33, 38) which follows in the transporting direction are integrated with each other.

14. Conveyor track (1, 9) as claimed in any of the foregoing claims, **characterized in that** the receiving space (6, 13, 20, 29, 35) and at least one of the first boundary (4, 11, 19, 28, 34, 41) and the second boundary (5, 12, 21, 31, 36) are coupled releasably to each other.

15. Conveyor track (1, 9) as claimed in any of the foregoing claims, **characterized in that** the receiving space (6, 13, 20, 29, 35) is bounded on at least one side by a third boundary (42) connected to the first boundary (4, 11, 19, 28, 34, 41) and the second boundary (5, 12, 21, 31, 36).

16. Conveyor track (1, 9) as claimed in claim 15, **characterized in that** the third boundary (42) is formed by a cord (17, 43, 44).

17. Conveyor track (1, 9) as claimed in claim 16, **characterized in that** the cord (17, 43, 44) is elastic.

18. Transport unit (3, 10, 18, 26, 33, 38) for use in a conveyor track (1, 9) as claimed in any of the claims 1-17, which transport unit (3, 10, 18, 26, 33, 38) is provided with:
- at least one receiving space (6, 13, 20, 29, 35) for containing at least one product (2, 14),
- a first boundary (4, 11, 19, 28, 34, 41) positioned on one side of the receiving space (6, 13, 20, 29, 35), and
- a second boundary (5, 12, 21, 31, 36) which is positioned on an opposite side of the receiving space (6, 13, 20, 29, 35) and which follows the first boundary (4, 11, 19, 28, 34, 41) in a transporting direction,
**characterized in that**
the receiving space (6, 13, 20, 29, 35) is provided with at least one support element (7, 15, 24, 32, 37, 39) for supporting the product (2, 14) such that the egg (2, 14) engages on at least a part of the first boundary (4, 11, 19, 28, 34, 41) during an at least substantially horizontal progress of the transport unit (3, 10, 18, 26, 33, 38).

## Patentansprüche

1. Förderer (1,9) zum Fördern von Produkten, insbesondere Eiern (2, 14), der zumindest eine Fördereinheit (3, 10, 18, 26, 33, 38) umfasst, welche Fördereinheit (3, 10, 18, 26, 33, 38) versehen ist mit:
- mindestens einem aufnehmenden Raum (6, 13, 20, 29, 35) zum Halten von mindestens einem Produkt (2, 14),
- einer ersten Begrenzung (4, 11, 19, 28, 34, 41), die auf einer Seite des aufnehmenden Raums (6, 13, 20, 29, 35) positioniert ist, und
- einer zweiten Begrenzung (5, 12, 21, 31, 36), die auf einer entgegensetzten Seite des aufnehmenden Raums (6, 13, 20, 29, 35) positioniert ist und die der ersten Begrenzung (4,11,19, 28, 34,41) in einer Förderrichtung folgt,
**dadurch gekennzeichnet, dass**
der aufnehmende Raum (6, 13, 20, 29, 35) mit mindestens einem Stützelement (7, 15, 24, 32, 37, 39) zum Stützen des Produkts (2, 14) auf eine Weise versehen ist, dass das Produkt (2, 14) mit mindestens einem Teil der ersten Begrenzung (4, 11, 19, 28, 34, 41) während einer zumindest im Wesentlichen waagerechten Fortbewegung der Fördereinheit (3, 10, 18, 26, 33, 38) Berührungskontakt hat.

2. Förderer (1, 9) nach Anspruch 1, **dadurch gekennzeichnet, dass** ein freier Raum (16) während einer im Wesentlichen waagerechten Fortbewegung der Fördereinheit (3, 10, 18, 26, 33, 38) sich zwischen dem Produkt (2, 14) und der zweiten Begrenzung (5, 12, 21, 31, 36) befindet.

3. Förderer (1, 9) nach Anspruch 1 oder 2, **dadurch gekennzeichnet, dass** das Stützelement (7, 15, 24, 32, 37, 39) mit einer Stützfläche (16) versehen ist, welche Stützfläche (16) in der Förderrichtung abwärts geneigt verläuft.

4. Förderer (1, 9) nach irgendeinem der vorangehenden Ansprüche, **dadurch gekennzeichnet, dass** das Stützelement (7, 15, 24, 32, 37, 39) mit einer Vielzahl abstehender Stützkörper (8) versehen ist, die sich in einem gegenseitigen Abstand befinden, wobei die freien äußeren Enden, die Teil der Stützkörper (8) bilden, eine Ebene bestimmen, die in der Förderrichtung abwärts geneigt verläuft.

5. Förderer (1, 9) nach irgendeinem der vorangehenden Ansprüche, **dadurch gekennzeichnet, dass** die erste Begrenzung (4, 11, 19, 28, 34, 41) und der aufnehmende Raum (6, 13, 20, 29, 35) schwenkbar miteinander verbunden sind.

6. Förderer (1, 9) nach irgendeinem der vorangehenden Ansprüche, **dadurch gekennzeichnet, dass** die zweite Begrenzung (5, 12, 21, 31, 36) und der aufnehmende Raum (6, 13, 20, 29, 35) schwenkbar miteinander verbunden sind.

7. Förderer (1, 9) nach irgendeinem der vorangehenden Ansprüche, **dadurch gekennzeichnet, dass** das Produkt (2, 14) in einer Richtung, die zumindest im Wesentlichen senkrecht zu der Förderrichtung liegt, frei verschiebbar ist.

8. Förderer (1,9) nach irgendeinem der vorangehenden Ansprüche, **dadurch gekennzeichnet, dass** das Stützelement (7, 15, 24, 32, 37, 39) so gebildet ist, dass das auf dem Förderer (1,9) befindliche Produkt (2, 14) sich in einer Vielzahl bevorzugter Stellungen positionieren kann, die von der Fördereinheit (3, 10, 18, 26, 33, 38) bereitgestellt werden.

9. Förderer (1, 9) nach irgendeinem der vorangehenden Ansprüche, **dadurch gekennzeichnet, dass** die erste Begrenzung (4, 11, 19, 28, 34, 41) mit einer ersten Stützfläche (22) versehen ist, die angepasst ist, das Produkt (2, 14) zu stützen, wobei die erste Stützfläche (22) und die Senkrechte einen Winkel einschließen, der zwischen 25° und 35° liegt, insbesondere bei 30°.

10. Förderer (1, 9) nach irgendeinem der vorangehenden Ansprüche, **dadurch gekennzeichnet, dass** die zweite Begrenzung (5, 12, 21, 31, 36) mit einer zweiten Stützfläche (23) versehen ist, die angepasst ist, das Produkt (2, 14) zu stützen, wobei die zweite Stützfläche (23) und die Senkrechte einen Winkel einschließen, der zwischen 15° und 25° liegt, insbesondere bei 20°.

11. Förderer (1, 9) nach irgendeinem der vorangehenden Ansprüche, **dadurch gekennzeichnet, dass** der Förderer (1, 9) mit Positionierungsmitteln für die Positionierung des Produkts (2, 14) versehen ist, die sich in einem Abstand von der Fördereinheit (3, 10, 18, 26, 33, 38) befinden, während einer zumindest im Wesentlichen waagerechten Fortbewegung der Fördereinheit (3, 10, 18, 26, 33, 38), sodass das Produkt (2, 14) mit zumindest einem Teil der ersten Begrenzung (4, 11, 19, 28, 34, 41) Berührungskontakt hat.

12. Förderer (1, 9) nach irgendeinem der vorangehenden Ansprüche, **dadurch gekennzeichnet, dass** der Förderer (1, 9) mit einer Vielzahl aufeinander folgender Fördereinheiten (3, 10, 18, 26, 33, 38) versehen ist.

13. Förderer (1, 9) nach Anspruch 12, **dadurch gekennzeichnet, dass** die zweite Begrenzung (5, 12, 21, 31, 36) einer Fördereinheit (3, 10, 18, 26, 33, 38) und die erste Begrenzung (4, 11, 19, 28, 34, 41) einer Fördereinheit (3, 10, 18, 26, 33, 38), die in der Förderrichtung folgt, miteinander vereint sind.

14. Förderer (1, 9) nach irgendeinem der vorangehenden Ansprüche, **dadurch gekennzeichnet, dass** der aufnehmende Raum (6, 13, 20, 29, 35) und zumindest eine der ersten Begrenzung (4, 11, 19, 28, 34, 41) und der zweiten Begrenzung (5, 12, 21, 31, 36) miteinander lösbar gekuppelt sind.

15. Förderer (1, 9) nach irgendeinem der vorangehenden Ansprüche, **dadurch gekennzeichnet, dass** der aufnehmende Raum (6, 13, 20, 29, 35) mindestens an einer Seite durch eine dritte Begrenzung (42) begrenzt wird, die mit der ersten Begrenzung (4, 11, 19, 28, 34, 41) und der zweiten Begrenzung (5, 12, 21, 31, 36) verbunden ist.

16. Förderer (1, 9) nach Anspruch 15, **dadurch gekennzeichnet, dass** die dritte Begrenzung (42) von einer Schnur (17, 43, 44) gebildet wird.

17. Förderer (1, 9) nach Anspruch 16, **dadurch gekennzeichnet, dass** die Schnur (17, 43, 44) elastisch ist.

18. Fördereinheit (3, 10, 18, 26, 33, 38) für die Verwendung in einem Förderer (1, 9) nach irgendeinem der Ansprüche 1-17, welche Fördereinheit (3, 10, 18, 26, 33, 38) versehen ist mit:
- mindestens einem aufnehmenden Raum (6, 13, 20, 29, 35) zum Halten von mindestens einem Produkt (2, 14),
- einer ersten Begrenzung (4, 11, 19, 28, 34, 41), die auf einer Seite des aufnehmenden Raums (6, 13, 20, 29, 35) positioniert ist, und
- einer zweiten Begrenzung (5, 12, 21, 31, 36), die auf einer entgegensetzten Seite des aufnehmenden Raums (6, 13, 20, 29, 35) positioniert ist und die der ersten Begrenzung (4, 11, 19, 28, 34, 41) in einer Förderrichtung folgt,
**dadurch gekennzeichnet, dass**
der aufnehmende Raum (6, 13, 20, 29, 35) mit mindestens einem Stützelement (7, 15, 24, 32, 37, 39) zum Stützen des Produkts (2, 14) auf eine Weise versehen ist, dass das Produkt (2, 14) mit mindestens einem Teil der ersten Begrenzung (4, 11, 19, 28, 34, 41) während einer zumindest im Wesentlichen waagerechten Fortbewegung der Fördereinheit (3, 10, 18, 26, 33, 38) Berührungskontakt hat.

## Revendications

1. Une piste de transport (1, 9) pour le transport de produits, en particulier des oeufs (2, 14), comprenant au moins une unité de transport (3, 10, 18, 26, 33, 38), laquelle unité de transport (3, 10, 18, 26, 33, 38) est munie :
- d'au moins un espace de réception (6, 13, 20, 29, 35) destiné à contenir au moins un produit (2, 14),
- d'un premier séparateur (4, 11, 19, 28, 34, 41) positionné d'un côté de l'espace de réception (6, 13, 20, 29, 35), et
- d'un second séparateur (5, 12, 21, 31, 36) lequel est positionné du côté opposé de l'espace de réception (6, 13, 20, 29, 35) et faisant suite au premier séparateur (4, 11, 19, 28, 34, 41) dans un sens de transport,
**caractérisée en ce que**
l'espace de réception (6, 13, 20, 29, 35) est pourvu d'au moins un élément support (7, 15, 24, 32, 37, 39) destiné à soutenir le produit (2, 14) de telle sorte que le produit (2, 14) fasse contact avec au moins une section du premier séparateur (4, 11, 19, 28, 34, 41) durant une progression au moins substantiellement horizontale de l'unité de transport (3, 10, 18, 26, 33, 38).

2. Une piste de transport (1, 9) selon la revendication 1, **caractérisée en ce qu'**un espace libre (16) se situe entre le produit (2, 14) et le second séparateur (5, 12, 21, 31, 36) durant une progression substantiellement horizontale de l'unité de transport (3, 10, 18, 26, 33, 38).

3. Une piste de transport (1,9) selon la revendication 1 ou 2, **caractérisée en ce que** l'élément support (7, 15, 24, 32, 37, 39) est pourvu d'une surface de soutien (16), laquelle surface de soutien (16) s'étend vers le bas dans le sens du transport.

4. Une piste de transport (1, 9) selon l'une quelconque des revendications précédentes, **caractérisée en ce que** l'élément support (7, 15, 24, 32, 37, 39) est pourvu de plusieurs membrures de soutien faisant saillie (8) situées à distance mutuelle, dont la section libre formant l'extrémité extérieure des membrures de soutien (8) définit un plan se prolongeant vers le bas dans le sens du transport.

5. Une piste de transport (1, 9) selon l'une quelconque des revendications précédentes, **caractérisée en ce que** le premier séparateur (4, 11, 19, 28, 34, 41) et l'espace de réception (6, 13, 20, 29, 35) sont reliés en pivot l'un à l'autre.

6. Une piste de transport (1, 9) selon l'une quelconque des revendications précédentes, **caractérisée en ce que** le second séparateur (5, 12, 21, 31, 36) et l'espace de réception (6, 13, 20, 29, 35) sont reliés en pivot l'un à l'autre.

7. Une piste de transport (1, 9) selon l'une quelconque des revendications précédentes, **caractérisée en ce que** le produit (2, 14) est libre de se déplacer dans une direction au moins substantiellement perpendiculaire au sens du transport.

8. Une piste de transport (1, 9) selon l'une quelconque des revendications précédentes, **caractérisée en ce que** l'élément support (7, 15, 24, 32, 37, 39) est formé de telle sorte que le produit (2, 14) positionné sur la piste de transport (1, 9) peut se positionner dans plusieurs positions préférentielles permises par l'unité de transport (3, 10, 18, 26, 33, 38).

9. Une piste de transport (1, 9) selon l'une quelconque des revendications précédentes, **caractérisée en ce que** le premier séparateur (4, 11, 19, 28, 34, 41) est pourvu d'une première surface de soutien (22) adaptée de manière à soutenir le produit (2, 14), la première surface de soutien (22) formant avec la verticale un angle compris entre 25° et 35°, en particulier 30°.

10. Une piste de transport (1, 9) selon l'une quelconque des revendications précédentes, **caractérisée en ce que** le second séparateur (5, 12, 21, 31, 36) est pourvu d'une seconde surface de soutien (23) adaptée de manière à soutenir le produit (2, 14), la seconde surface de soutien (23) formant avec la verticale un angle compris entre 15° et 25°, en particulier 20°.

11. Une piste de transport (1, 9) selon l'une quelconque des caractéristiques précédentes, **caractérisée en ce que** la piste de transport (1, 9) est munie de moyens de positionnement situés à distance de l'unité de transport (3, 10, 18, 26, 33, 38) pour permettre le positionnement du produit (2, 14) durant une progression au moins substantiellement horizontale de l'unité de transport (3, 10, 18, 26, 33, 38) de telle sorte que le produit (2, 14) fasse contact avec au moins une section du premier séparateur (4, 11, 19, 28, 34, 41).

12. Une piste de transport (1, 9) selon l'une quelconque des caractéristiques précédentes, **caractérisée en ce que** la piste de transport (1, 9) est équipée de plusieurs unités de transport successives (3, 10, 18, 26, 33, 38).

13. Une piste de transport (1, 9) selon la revendication 12, **caractérisée en ce que** le second séparateur (5, 12, 21, 31, 36) d'une unité de transport (3, 10, 18, 26, 33, 38) et le premier séparateur (4, 11, 19, 28, 34, 41) d'une unité de transport (3, 10, 18, 26, 33, 38) qui le suit dans le sens du transport sont intégrés l'un avec l'autre.

14. Une piste de transport (1, 9) selon l'une quelconque des revendications précédentes, **caractérisée en ce que** l'espace de réception (6, 13, 20, 29, 35) et au moins un élément parmi le premier séparateur (4, 11, 19, 28, 34, 41) et le second séparateur (5, 12, 21, 31, 36) sont couplés l'un à l'autre tout en pouvant être détachés.

15. Une piste de transport (1, 9) selon l'une quelconque des revendications précédentes, **caractérisée en ce que** l'espace de réception (6, 13, 20, 29, 35) est relié sur au moins un de ses côtés à un troisième séparateur (42) connecté au premier séparateur (4, 11, 19, 28, 34, 41) et au second séparateur (5, 12, 21, 31, 36).

16. Une piste de transport (1, 9) selon la revendication 15, **caractérisée en ce que** le troisième séparateur (42) est formé par un cordon (17, 43, 44).

17. Une piste de transport (1, 9) selon la revendication 16, **caractérisée en ce que** le cordon (17, 43, 44) est élastique.

18. Une unité de transport (3, 10, 18, 26, 33, 38) à utiliser sur une piste de transport (1, 9) selon l'une quelconque des revendications 1-17, ladite unité de transport (3, 10, 18, 26, 33, 38) étant munie :
- d'au moins un espace de réception (6, 13, 20, 29, 35) destiné à contenir au moins un produit (2, 14),
- d'un premier séparateur (4, 11, 19, 28, 34, 41) positionné d'un côté de l'espace de réception (6, 13, 20, 29, 35), et
- d'un second séparateur (5, 12, 21, 31, 36) lequel est positionné du côté opposé de l'espace de réception (6, 13, 20, 29, 35) et faisant suite au premier séparateur (4, 11, 19, 28, 34, 41) dans un sens de transport,
**caractérisée en ce que**
l'espace de réception (6, 13, 20, 29, 35) est équipé d'au moins un élément support (7, 15, 24, 32, 37, 39) destiné à soutenir le produit (2, 14) de telle sorte que le produit (2, 14) fasse contact avec au moins une section du premier séparateur (4, 11, 19, 28, 34, 41) durant une progression au moins substantiellement horizontale de l'unité de transport (3, 10, 18, 26, 33, 38).
